# EUROPÄISCHE PATENTANMELDUNG

(11) **EP 0 999 726 A2**
(43) Veröffentlichungstag der Anmeldung: **10.05.2000**
(21) Anmeldenummer: 99119540.5
(22) Anmeldetag: 01.10.1999
(51) Int. Cl.: H05B 3/74, G05D 23/19, F24C 15/10

(54) **Verfahren zum Einstellen des Grenzwertes der Betriebstemperatur eines Kochfeldes und Vorrichtung zur Durchführung des Verfahrens**

(30) Priorität: 05.11.1998 DE 19851029
(71) Anmelder: Schott Glas, 55122 Mainz (DE); CARL-ZEISS-STIFTUNG trading as Schott Glas, 55122 Mainz (DE)
(72) Erfinder: Nass, Peter, Dr., 55120 Mainz (DE); Engelmann, Harry, 55218 Ingelheim (DE); Dudek, Roland, 55545 Bad Kreuznach (DE); Schaupert, Kurt, Dr., 65719 Hofheim (DE)
(74) Vertreter: Fuchs Mehler Weiss & Fritzsche

(57) **Zusammenfassung**

Glas- bzw. Glaskeramikmaterialien für Kochflächen moderner Kochgeräte weisen eine begrenzte Temperatur/Zeitbelastbarkeit auf. Um zu gewährleisten, daß während der gewährleisteten Lebensdauer bei einer angenommenen "normierten" Benutzungshäufigkeit die zulässige Temperatur/Zeitbelastung nicht überschritten wird, sind in den Kochgeräten Betriebstemperaturbegrenzer vorgesehen, die auf eine feste Abschalttemperatur eingestellt sind.

Ist die tatsächliche Benutzungshäufigkeit geringer als angenommen, kann das Potential des Kochgerätes hinsichtlich der Belastbarkeit seiner Kochfläche nicht ausgenutzt werden.

Die Erfindung sieht daher vor, daß fortlaufend die Temperatur-Zeitbelastung gemessen und abhängig von dem Vergleich mit der zulässigen Belastung für die aktuelle Nutzungsdauer seit Inbetriebnahme des Kochfeldes die Abschalttemperatur verändert wird.

## Beschreibung

Die Erfindung bezieht sich auf ein Verfahren zum Einstellen des Grenzwertes der Betriebstemperatur eines Kochfeldes, das eine Glas-/Glaskeramikkochfläche mit mindestens einer beheizten Kochzone aufweist.

Die Erfindung bezieht sich ferner auf eine Vorrichtung zur Durchführung dieses Verfahrens.

Das Glaskeramikmaterial für moderne Kochgeräte mit Glaskeramikkochflächen wird durch eine Temperatur/Zeit-Behandlung von Spezialgläsern hergestellt. Hierbei wird u.a. die für den Gebrauch entscheidende niedrige thermische Dehnung eingestellt. Treten im Gebrauch unzulässig hohe Temperatur/Zeit-Belastungen auf, geht u.a. die niedrige thermische Dehnung verloren und es kann im Extremfall zum Bruch der Glaskeramik kommen.

Sinngemäß gleiches gilt für Kochgeräte, die thermisch oder chemisch vorgespanntes Glas benutzen. Hier kommt es bei hohen Betriebstemperaturen zu einem Verlust der Vorspannung, was zu einer Zerstörung des Produktes führen kann.

Gemäß dem Stand der Technik ist bei Kochfeldern der vorgenannten Art eine Temperaturüberwachung der Glas-/Glaskeramikkochfläche mittels Betriebstemperaturbegrenzer vorgesehen, die so eingestellt sind, daß während der erforderlichen Lebensdauer bei einer angenommenen Benutzungshäufigkeit die zulässige Temperatur/Zeit-Belastung der Glas-/Glaskeramikkochfläche nicht überschritten wird. Richtlinie für die Benutzungshäufigkeit ist dabei der Entwurf zur Deutschen Norm DIN VDE 0700 Teil 6 Anhang 8.

Es sind mechanische Betriebstemperaturbegrenzer mit einem Stabausdehnungsregler aber auch elektronische Betriebstemperaturbegrenzer bekannt. Als Sensor für diese elektronischen Betriebstemperaturbegrenzer können direkt auf die Kochfläche aufgebrachte Leiter (so die DE 40 22 846 C2) oder diskrete Platin-Temperatur-Meßwiderstände (so die DE 37 36 005 A1) verwendet werden. Diese elektrischen Betriebstemperaturbegrenzer sind jedoch - wie die mechanischen Betriebstemperaturbegrenzer - gemäß dem Stand der Technik immer auf einen festen Grenz-Temperaturwert justiert und schalten die Beheizung der jeweiligen Kochzone ab, sobald der eingestellte Grenzwert der Betriebstemperatur, auch Abschalttemperatur genannt, erreicht wird.

Diese Betriebstemperaturbegrenzer überwachen so die in den Kochzonen auftretenden Temperaturen dahingehend, daß innerhalb der vorgegebenen Lebensdauer keine unzulässige Veränderung des Glas-/Glaskeramikmaterials auftritt.

Die Benutzungshäufigkeit der Kochgeräte ist aufgrund unterschiedlicher Lebensgewohnheiten von Haushalt zu Haushalt verschieden. Daher geht die vorgenannte Norm bei der angenommenen Benutzungshäufigkeit zur Sicherheit von einem Benutzer aus, der vergleichsweise hohe Belastungen durch häufiges Kochen erzeugt. Die angenommenen Werte für die Benutzungshäufigkeit und die daraus bestimmten Grenzwerte der Betriebstemperaturen führen beim Stand der Technik mit Nachteil dazu, daß Verbraucher mit geringerer Benutzungsdauer die zulässige Temperatur/Zeit-Belastung, d.h. das Potential des Kochgerätes hinsichtlich der Belastbarkeit seiner Glas-/Glaskeramikkochfläche, nicht ausnutzen können. Zulässig wären bei der verringerten Benutzungsdauer höhere Betriebstemperaturen, wodurch z.B. eine verkürzte Ankochdauer erreicht werden könnte.

Verwendet der Benutzer nur gutes Kochgeschirr oder kommt z.B. der Fall des Leerkochens von Geschirr nicht vor, werden die angenommenen Temperatur/Zeit-Belastungen ebenfalls nicht ausgenutzt. Auch hierbei wird somit das Potential der Glaskeramik-Kochfläche nicht ausgenutzt.

Der Erfindung liegt die Aufgabe zugrunde, ausgehend von dem eingangs bezeichneten Verfahren dieses so zu führen bzw., ausgehend von der eingangs bezeichneten Vorrichtung diese so auszubilden, daß das Potential des Kochgerätes hinsichtlich der Belastbarkeit seiner Glas-/Glaskeramikkochfläche besser ausgenutzt werden kann, unter Gewährleistung der Lebensdauer des Kochgerätes.

Die Lösung dieser Aufgabe gelingt gemäß der Erfindung für das Verfahren mit den Schritten:
- Messen der Kochflächen-Temperatur und der Einschaltdauer des Kochfeldes bei jeder Benutzung des Kochfeldes unter Bildung von Temperatur/Zeit-Wertepaaren für die Temperatur/Zeit-Belastung in den jeweiligen Benutzungs-Intervallen und Speichern dieser Temperatur/Zeit-Belastungen als kumulierte aktuelle Temperatur/Zeit-Belastung ab Inbetriebnahme des Kochfeldes sowie Speichern der jeweiligen Einschaltdauer als kumulierte Einschaltdauer ab Inbetriebnahme des Kochfeldes,
- Speichern einer vorgegebenen Folge von Temperatur/Zeit-Wertepaaren für eine angenommene Benutzungshäufigkeit als zulässige Temperatur/Zeit-Belastung über die angenommene Lebensdauer der Kochfläche,
- Vergleichen der gespeicherten kumulierten aktuellen Zeit/Temperatur-Belastung mit der für die jeweilige gespeicherte kumulierte Einschaltdauer gespeicherten zulässigen Temperatur/Zeit-Belastung in vorgegebenen Abständen (Vergleichsintervalle),
- Vorgeben eines Grenzwertes für die Betriebstemperatur abhängig vom jeweiligen Vergleich zum Einhalten einer zulässigen Temperatur/Zeit-Belastung der Glas-/Glaskeramik-Kochfläche für die angenommene Lebensdauer des Kochfeldes.

Hinsichtlich der Vorrichtung gelingt die Lösung der Aufgabe, ausgehend von einer Vorrichtung mit:
- einem Betriebstemperaturbegrenzer mit einstellbarem Grenzwert der Betriebstemperatur und mindestens einem ihm zugeordneten, die Betriebstemperatur in der beheizten Kochzone erfassenden Temperatursensor,
- einer Steueranordnung zum Abschalten der Beheizung der Kochzone bei Erreichen eines Grenzwertes der Betriebstemperatur
erfindungsgemäß dadurch, daß dem Betriebstemperaturbegrenzer (9) zum Einstellen seines Grenzwertes ein Zeitgeber und eine Meß- sowie Auswerteeinheit zum Messen, Speichern und Vergleichen der in den Verfährensschritten angegebenen Werte zugeordnet ist.

Durch die erfindungsgemäßen Maßnahmen wird mit Vorteil die Abschalt-Temperatur des Betriebstemperaturbegrenzers der Benutzungshäufigkeit angepaßt. Nach einer Phase geringerer Benutzung als durch den Norm-Entwurf als zulässige Belastung vorgegeben, wird eine höhere Temperatur zugelassen, bis die zulässige Belastungskurve erreicht wird.

Umgekehrt kann es nach sehr häufiger Benutzung des Kochgerätes notwendig sein, den Grenzwert der Betriebstemperatur herabzusetzen.

Durch eine hohe Betriebstemperatur der Kochfläche wird die in das Kochgeschirr übertragbare Leistung erhöht; hiermit wird mit Vorteil die Ankochdauer verkürzt, ohne daß die zulässige Temperatur/Zeitbelastung überschritten und damit die gewährleistete Lebensdauer des Kochgerätes beeinträchtigt wird.

In der Praxis wechseln sich Phasen häufiger Benutzung mit solchen geringerer Benutzung ab. Nach einer Phase geringer Benutzung liegt die tatsächliche kumulierte Belastung unter der für diesen Zeitpunkt zugelassenen Belastung. Dies wird durch die erfindungsgemäßen Maßnahmen erkannt, worauf der zulässige Grenzwert der Betriebstemperatur erhöht wird. Je nach Nutzungshäufigkeit wird mit dieser neuen Temperatureinstellung die zulässige Belastungskurve früher oder später wieder erreicht.

Bei seltener Benutzung im Vergleich zur im Normentwurf angenommenen steht somit im Bedarfsfall mit Vorteil immer eine höhere Leistungsfähigkeit des Kochgerätes zur Verfügung als dies beim Stand der Technik der Fall ist.

Gemäß einer Weiterbildung der Erfindung wird das Verfahren so geführt, daß die gemessenen Temperatur/Zeit-Wertepaare der betrieblichen Belastung auf äquivalente Temperatur/Zeit-Wertepaare bei einer Bezugstemperatur umgerechnet werden und die so ermittelte Temperatur/Zeit-Belastung mit der zulässigen Temperatur/Zeit-Belastung bei der Bezugstemperatur und der jeweiligen Nutzungsdauer ab Inbetriebnahme des Kochfeldes verglichen wird.

Diese Weiterleitung der Erfindung macht sich dabei eine charakteristische Eigenschaft der die Kochflächen bildenden Glas- bzw. Glaskeramikmaterialien zunutze, nach der die real auftretenden Temperatur/Zeit-Belastungen jeweils auf Bezugstemperaturen normiert werden können, wodurch sie kumuliert und mit einer maximal zulässigen Belastungsdauer (bei dieser Bezugstemperatur) verglichen werden können.

Bei der handelsüblichen Glaskeramik CERAN® beispielsweise ist die zulässige Belastungsdauer 5000 h bei 560°C oder 1000 h bei 610°C. Eine Belastung von 1 h/610°C kann somit in eine äquivalente Belastung bei der Bezugstemperatur 560°C von 5 h umgerechnet werden und zu den schon vorhandenen Belastungen bei dieser Bezugstempeatur addiert werden.

Auch die Vorspannung von vorgespanntem Glas geht durch eine Temperatur/Zeit-Belastung verloren, die durch Wertepaare gekennzeichnet ist, die auf äquivalente Bezugstemperaturen bezogen werden können.

Alternativ könnte man die Betriebstemperaturen in feste Intervalle unterteilen und die Zeiten, in denen die jeweiligen Temperaturen erreicht werden, unterschiedlich wichten.

Für die Festlegung des Vergleichs-Intervalles stehen dem Fachmann gemäß Ausgestaltungen der Erfindung mehrere Möglichkeiten zur Verfügung, die im wesentlichen durch die gewünschte Häufigkeit der Anpassung der Betriebs-Grenztemperatur bestimmt werden.

So kann gemäß einer ersten Ausgestaltung der Erfindung das Verfahren so geführt werden, daß das Vergleichs-Intervall durch den einzelnen Kochvorgang vorgegeben wird. In diesem Fall erfolgt daher die Anpassung des Grenzwertes der Betriebstemperatur nach jedem Kochvorgang.

Gemäß zwei anderen Ausgestaltungen der Erfindung kann das Verfahren auch so geführt werden, daß das Vergleichs-Intervall entweder durch ein bestimmtes Zeitintervall oder durch eine bestimmte Anzahl von Kochvorgängen vorgegeben wird. In diesen Fällen erfolgt somit die Anpassung des Grenzwertes der Betriebstemperatur in festen Zeitintervallen oder nach mehreren Kochvorgängen.

Die Anpassung des Grenzwertes der Betriebstemperatur kann dabei gemäß weiteren Ausgestaltungen der Erfindung in Sprüngen oder kontinuierlich erfolgen, wobei im ersteren Fall die Steuerung einfacher ist.

Im einfachsten Fall wird gemäß einer Ausgestaltung der Erfindung das Verfahren so geführt, daß der zulässige Grenzwert der Betriebstemperatur so geändert wird, daß ein zeitlich linearer Verlauf der Temperatur/Zeit-Belastung des Kochgerätes erzielt wird.

Gemäß einer Weiterbildung der Erfindung wird das Verfahren so geführt, daß der zulässige Grenzwert der Betriebstemperatur so geändert wird, daß ein Verlauf der Temperatur/Zeit-Belastung des Gerätes erzielt wird, der zeitlich nicht-linear ist, derart, daß anfänglich, bevorzugt in der ersten Hälfte der Lebensdauer, eine überproportionale Ausnutzung der Temperatur/Zeit-Belastbarkeit stattfindet.

Dies erlaubt für einen wählbaren Zeitraum eine erhöhte Leistungsfähigkeit des Kochgerätes. Wird die zugelassene Belastungskurve in diesem Zeitraum ausgeschöpft, steht für die verbliebene Lebensdauer nur noch eine verringerte Leistungsfähigkeit zur Verfügung. Wird sie nicht voll in Anspruch genommen, wie es dem oben geschilderten praxisüblichen Betrieb entspricht, steht von Anfang bis Ende der Benutzung eine hohe Leistung zur Verfügung.

Die Änderung des Grenzwertes der Betriebstemperatur kann manuell aufgrund entsprechender Belastungsanzeigen oder selbsttätig mittels einer elektronischen Einheit erfolgen. Der letzteren Variante wird in der Praxis der einfacheren Bedienung halber der Vorzug gegeben, auch wenn die Steuerung aufwendiger wird.

Weitere ausgestaltende Merkmale und Vorteile der Erfindung ergeben sich anhand der Beschreibung von in den Zeichnungen dargestellten Ausführungsbeispielen.

Es zeigen:
- Fig. 1: ein Blockschaltbild einer Vorrichtung zum Einstellen des Grenzwertes der Betriebstemperatur eines Kochfeldes mit einer Glaskeramikkochfläche,
- Fig. 2: ein Ablaufdiagramm einer in der Vorrichtung nach Fig. 1 enthaltenen Steuerung,
- Fig. 3: in einem Belastung/Zeit-Diagramm eine Belastungskurve bei der gemäß Norm angenommenen Belastungshäufigkeit, sowie im Vergleich dazu eine Belastungskurve bei geringerer Benutzungshäufigkeit,
- Fig. 4: in einem Belastung/Zeit-Diagramm eine Belastungskurve bei zwischenzeitlich geringerer Belastung mit einem bekannten Betriebstemperaturbegrenzer und im Vergleich dazu die Belastungskurve mit einem erfindungsgemäßen Betriebstemperaturbegrenzer,
- Fig. 5: in einem Belastung/Zeit-Diagramm den Verlauf der Belastungskurve bei unterschiedlichen, wechselnden Belastungen, und
- Fig. 6: in einem Belastung/Zeit-Diagramm die Einstellung einer nicht-linearen Belastungskurve durch eine entsprechende Änderung des Grenzwertes der Betriebstemperatur im Vergleich zu einer linearen Belastungskurve.

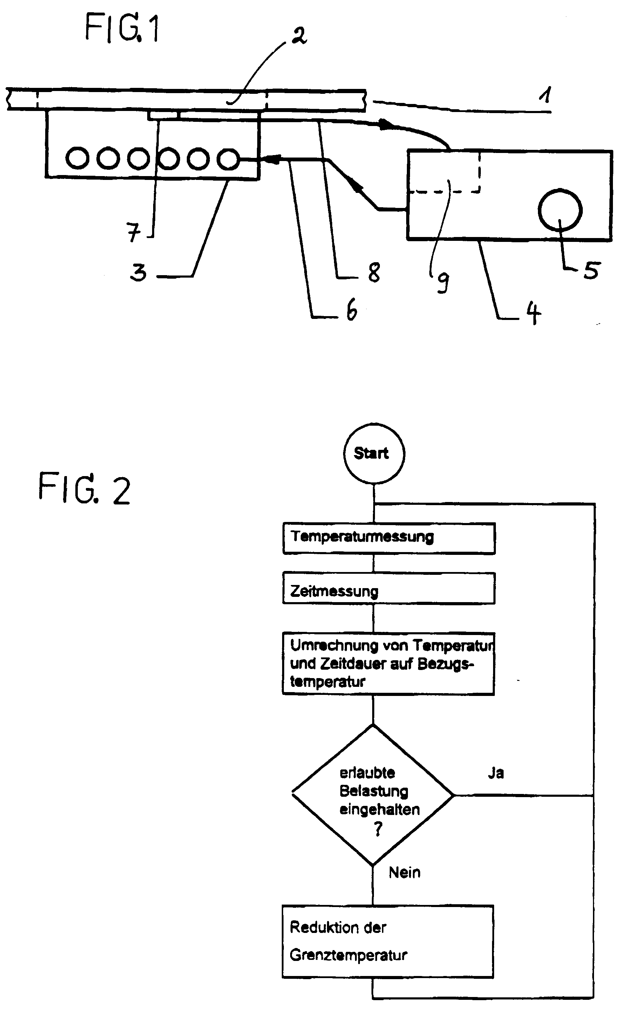

Die Fig. 1 zeigt eine Vorrichtung zum Einstellen des Grenzwertes der Betriebstemperatur eines Kochfeldes, das eine Glaskeramikkochfläche 1 mit mindestens einer Kochzone 2 aufweist, die mittels eines elektrischen Heizkörpers 3 von unten beheizt wird. Die Vorrichtung weist ferner eine Steuerung 4 auf, die ein konventionelles Betätigungsglied 5 für die Einstellung der Heizleistung über die Leitung 6 aufweist.

Es ist ferner ein Temperatursensor 7 an der Unterseite der Kochzone 2 vorgesehen, der über eine Leitung 8 mit der Steuerung 4 verbunden ist.

Der Aufbau der Steuerung hinsichtlich der Einstellung der Heizleistung ist konventionell. Insbesondere dient der Temperatursensor 7 als IST-Wert-Geber für eine geregelte Einstellung der Heizleistung.

Die Steuerung 4 weist ferner einen symbolisch dargestellten Betriebstemperaturbegrenzer 9 auf, der der Begrenzung der von dem Temperatursensor 7 erfaßten Betriebstemperatur dient, um so die zulässige Temperatur/Zeit-Belastbarkeit der Glaskeramik-Kochfläche 1 in der Kochzone 2 für die Nutzungsdauer des Kochgerätes durch Abschalten des Heizkörpers 3 bei Erreichen eines entsprechenden Grenzwertes der Betriebstemperatur einzuhalten.

Die erlaubte Temperatur/Zeit-Belastung über die Lebensdauer des Glaskeramikmaterials ist dem Hersteller der Glaskeramik als Materialgröße bekannt. Diese wird als Temperatur/Zeit-Wertepaar angegeben. Ebenso ist bekannt, wie sich diese Belastbarkeit bei anderen Temperaturen verhält. Für die unter der Marke CERAN® bekannte Glaskeramik ergeben sich folgende Wertepaare:

| Temperatur | Belastungsdauer |
|---|---|
| 5000 h | 560°C bzw. |
| 1000 h | 610°C bzw. |
| 100 h | 660°C bzw. |
| 10 h | 710°C bzw. |
| 5 h | 760°C |

Aufgrund dieser Angaben ist eine Umrechnung der Belastungsdauer bei einer beliebigen Temperatur (z.B. 610°C für 1 h) in eine äquivalente Dauer bei Standard-Temperatur (z.B. 5 h bei 560°C) möglich.

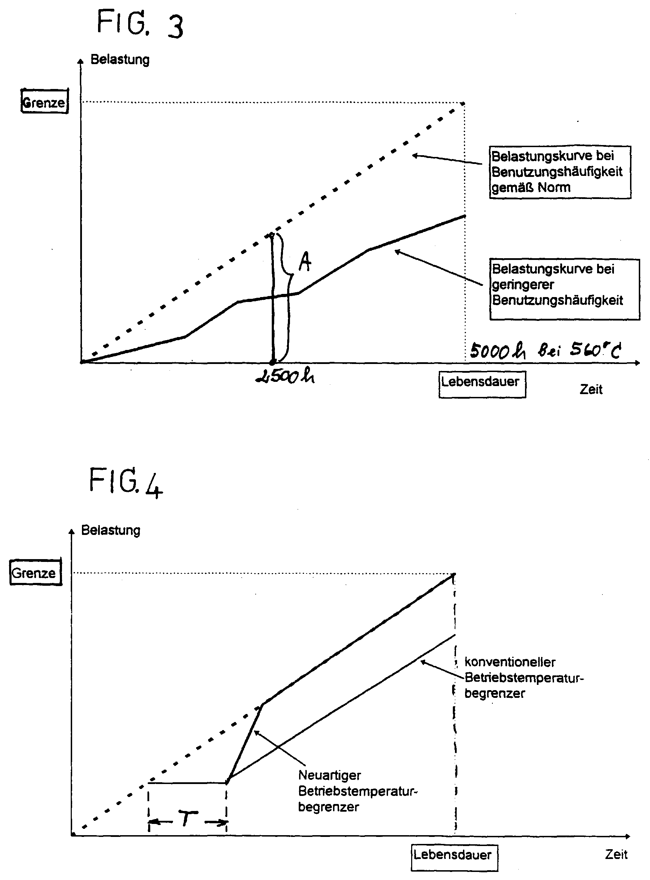

Die bekannten Betriebstemperaturbegrenzer sind auf einen festen Grenzwert der Betriebstemperaturwert eingestellt, der so gewählt ist, daß während der garantierten Lebensdauer bei einer angenommenen Benutzungshäufigkeit die zulässige Temperatur/Zeit-Belastung der Glaskeramik-Kochfläche 1 nicht überschritten wird. Richtlinie für die zulässige Benutzungshäufigkeit ist dabei der eingangs erwähnte Norm-Entwurf. Die sich dabei ergebende lineare Belastungskurve ist im Belastung/Zeit-Diagramm nach Fig. 3 gestrichelt dargestellt. Bei der Glaskeramik der Marke CERAN® ist dabei die Lebensdauer von 5000 h bei 560°C eingetragen. Ist jedoch die Temperatur/Zeit-Belastung durch eine geringere Benutzungshäufigkeit kleiner als in dem Norm-Entwurf angenommen, dann liegt die Belastungskurve, wie die Fig. 3 am Beispiel der mit einer durchgehenden Linie dargestellten Kurve zeigt, tiefer als die "normierte Belastungskurve", und es kann mit Nachteil der potentielle Belastungs-Grenzwert innerhalb der garantierten Lebensdauer nicht erreicht werden.

Dieser Nachteil wird durch die Erfindung vermieden. Diese sieht eine Anpassung des Grenzwertes der Betriebstemperatur an die Benutzungshäufigkeit vor.

Dazu sind in dem Betriebstemperaturbegrenzer 9 zusätzlich ein Zeitmeßglied und Speichermittel sowie eine Rechenstufe vorgesehen. Diese Mittel werden dabei vorzugsweise durch Programmteile eines Mikroprozessors gebildet.

Gemäß dem in Fig. 2 dargestellten Ablaufdiagramm erfolgt mit diesen Mitteln nach dem Start, ausgelöst durch ein Einschalten des Heizkörpers 3, eine Messung der Glaskeramiktemperatur in der jeweiligen Kochzone durch den Sensor 7 sowie die Messung der Dauer der Temperaturbeanspruchung. Das gemessene Wertepaar Temperatur/Zeit, d.h. die Belastung der Glaskeramik, wird nun gemäß oben angegebener Tabelle, die in der Steuerung abgelegt ist, auf die äquivalente Bezugstemperatur, im Beispiel also auf die Belastung bei 560°C umgerechnet. Die sich bei den einzelnen Kochvorgängen ergebenden Belastungen sind dadurch in einem Speicher als aktuelle Gesamtbelastung kumulierbar. Weiterhin wird in einem Speicher die Zeit seit Inbetriebnahme des Kochgerätes mitprotokolliert. Durch Vergleich der gemessenen IST-Belastung mit der erlaubten Belastung, gespeichert als Wertepaare entsprechend der gestrichelten Kurve der Fig. 3, bei der abgelaufenen Nutzungsdauer wird festgestellt, ob der Grenzwert der Betriebstemperatur zurückgenommen werden muß, so daß die Belastung langsamer ansteigt oder ob der Grenzwert angehoben werden kann. Wird beispielsweise nach der Hälfte der Nutzungsdauer bei 2500 h festgestellt, daß die kumulierte Belastung kleiner als der Wert A in Fig. 3 ist, kann der Grenzwert der Betriebstemperatur erhöht werden.

An Daten werden während des Betriebes daher nur die kumulierte Belastung und die Zeit seit Inbetriebnahme gespeichert; eine Speicherung der gesamten Historie der Kochvorgänge ist nicht erforderlich. Die Werte für die erlaubte Belastung werden für die gesamte Lebensdauer fest vorgegeben.

Durch eine Erhöhung des Grenzwertes der Betriebstemperatur um 50 K ist unter ansonsten gleichen Bedingungen mit großem Vorteil eine Reduktion der Ankochdauer um 25 % möglich.

Nach einer Phase geringerer Benutzungshäufigkeit (dargestellt durch den Zeitabschnitt T in der Belastungskurve nach Fig. 4) kann daher eine höhere Abschalttemperatur zugelassen werden, bis sich die Belastung wieder der vorgegebenen Belastung gemäß der "normierten" Belastungskurve (gestrichelt in Fig. 4 dargestellt) nähert. Bei einem konventionellen Temperaturbegrenzer mit fest eingestellter Abschalttemperatur würde die aktuelle Belastungskurve unterhalb der "normierten" Belastungskurve liegen.

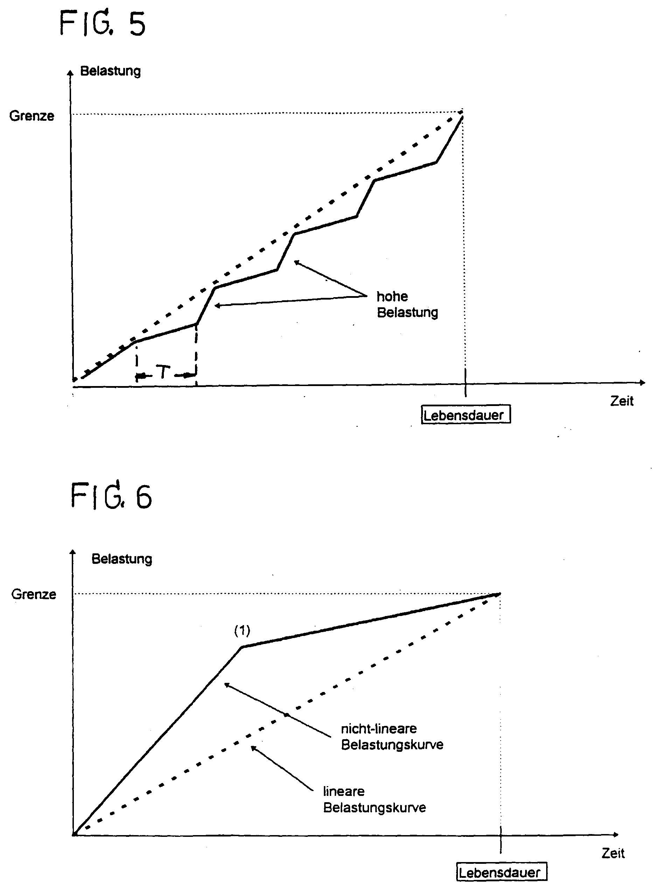

In der Praxis wechseln sich Phasen häufiger Benutzung mit solchen geringerer Benutzung ab, wie in Fig. 5 anhand der durchgezogenen Belastungskurve gezeigt. Nach einer Phase T geringer Benutzung liegt die tatsächliche kumulierte Belastung unter der für diesen Zeitpunkt zugelassenen Belastung, gestrichelt dargestellt durch die "normierte" Kurve. Dies wird von der Steuerung erkannt, worauf die zulässige Abschalttemperatur erhöht wird. Je nach Nutzungshäufigkeit wird mit dieser neuen Abschalttemperatureinstellung die zulässige Belastungskurve früher oder später wieder erreicht.

Bei seltener Benutzung im Vergleich zur im Normentwurf angenommenen steht somit im Bedarfsfall immer eine höhere Leistungsfähigkeit des Systems zur Verfügung als dies beim Stand der Technik der Fall ist.

In einer Weiterführung der erfindungsgemäßen Lösung wird die kumulierte Belastungskurve, wie in Fig. 6 dargestellt, nicht-linear, vorzugsweise anfangs steiler, gewählt. Dies erlaubt für einen wählbaren Zeitraum eine erhöhte Leistungsfähigkeit des Kochgerätes. Wird die gemäß Norm zugelassene Belastungskurve (gestrichelt dargestellt) in diesem Zeitraum ausgeschöpft, steht für die verbliebene Lebensdauer nur noch eine verringerte Leistungsfähigkeit zur Verfügung. Wird sie nicht voll in Anspruch genommen, wie es dem oben geschilderten praxisüblichen Betrieb entspricht, steht von Anfang bis Ende der Benutzung eine hohe Leistung zur Verfügung.

Für die Temperaturgrenze wird ein Maximalwert (Sicherheitsgrenze) festgelegt, der die maximale Steigung der IST-Belastungskurve festlegt. Hierdurch wird verhindert, daß im System übermäßig hohe Temperaturen entstehen, die zur Schädigung von Einbauteilen des Gerätes, Kochgeschirr oder umgebenden Möbeln führen könnten. Diese Sicherheitsgrenze als feste Grenze würde jedoch zu einer Belastung führen, die höher als die über die Lebensdauer zulässige ist.

Zur Erreichung der höheren Abschalttemperatur wird typischerweise die Grenztemperatur des Betriebstemperaturbegrenzers 9 erhöht. Wird die zulässige Abschalt-Temperatur dabei nicht erreicht, wird gegebenenfalls die Leistung des Heizkörpers erhöht, um die erhöhte Abschalttemperatur auszunutzen.

Im Ausführungsbeispiel ist ein elektrischer Heizkörper 3 vorgesehen. Die Ausführungen gelten entsprechend für eine Gasbeheizung unterhalb der Glaskeramik-Kochfläche.

Beim Einbau von konventionellen Massekochplatten in vorgespannte Glasplatten ist gemäß dem Stand der Technik ebenfalls ein auf eine feste Temperatur justierter Betriebstemperaturbegrenzer vorgesehen (DE 37 39 943), um das System vor Verlust der Vorspannung der Glasplatte zu schützen. Auch bei offenen Gasbrennern Bohrungen der vorgespannten Glasplatten treten in der Nähe des Brenners in einigen Betriebsfällen hohe Temperaturen auf, die zum Verlust der Vorspannung führen, falls sie über die gesamte Betriebsdauer anliegen. Gleiches gilt für die Elektrobeheizung durch Induktionsspulen und einer Kochoberfläche aus vorgespanntem Glas. Unter der Annahme einer bestimmten Benutzungshäufigkeit und mit dem bekannten Verlauf des Verlustes der Vorspannung (z.B. 290°C / 1000 h; 300°C /100 h) wird in den bekannten Fällen die feste Justage des Schutztemperaturbegrenzers gewählt.

Bei gegenüber der oben genannten angenommenen Benutzungshäufigkeit verringerten Benutzung wird durch die Erfindung die Betriebs-Grenztemperatur erhöht, wodurch der Betriebstemperaturbegrenzer des Kochgerätes in weniger Fällen abschaltet.

## Patentansprüche

1. Verfahren zum Einstellen des Grenzwertes der Betriebstemperatur eines Kochfeldes, das eine Glas-/Glaskeramik-Kochfläche mit mindestens einer beheizten Kochzone aufweist, mit den Schritten:
- Messen der Kochflächen-Temperatur und der Einschaltdauer des Kochfeldes bei jeder Benutzung des Kochfeldes unter Bildung von Temperatur/Zeit-Wertepaaren für die Temperatur/Zeit-Belastung in den jeweiligen Benutzungs-Intervallen und Speichern dieser Temperatur/Zeit-Belastungen als kumulierte aktuelle Temperatur/Zeit-Belastung ab Inbetriebnahme des Kochfeldes sowie Speichern der jeweiligen Einschaltdauer als kumulierte Einschaltdauer ab Inbetriebnahme des Kochfeldes,
- Speichern einer vorgegebenen Folge von Temperatur/Zeit-Wertepaaren für eine angenommene Benutzungshäufigkeit als zulässige Temperatur/Zeit-Belastung über die angenommene Lebensdauer der Kochfläche,
- Vergleichen der gespeicherten kumulierten aktuellen Zeit/Temperatur-Belastung mit der für die jeweilige gespeicherte kumulierte Einschaltdauer gespeicherten zulässigen Temperatur/Zeit-Belastung in vorgegebenen Abständen (Vergleichsintervalle),
- Vorgeben eines Grenzwertes für die Betriebstemperatur abhängig vom jeweiligen Vergleich zum Einhalten einer zulässigen Temperatur/Zeit-Belastung der Glas-/Glaskeramik-Kochfläche für die angenommene Lebensdauer des Kochfeldes.

2. Verfahren nach Anspruch 1, dadurch gekennzeichnet, daß die in den Benutzungs-Intervallen gemessenen Temperatur/Zeit-Wertepaare der betrieblichen Belastung auf äquivalente Temperatur/Zeit-Wertepaare bei einer Bezugstemperatur umgerechnet werden und die so ermittelte Temperatur/Zeit-Belastung mit der für die kumulierte Einschaltdauer ab Inbetriebnahme des Kochfeldes zulässigen Temperatur/Zeit-Belastung bei der Bezugstemperatur verglichen wird.

3. Verfahren nach Anspruch 1 oder 2, dadurch gekennzeichnet, daß das Vergleichsintervall durch den einzelnen Kochvorgang vorgegeben wird.

4. Verfahren nach Anspruch 1 oder 2, dadurch gekennzeichnet, daß das Vergleichsintervall durch ein bestimmtes Zeitintervall vorgegeben wird.

5. Verfahren nach Anspruch 1 oder 2, dadurch gekennzeichnet, daß das Vergleichsintervall durch eine bestimmte Anzahl von Kochvorgängen vorgegeben wird.

6. Verfahren nach einem der Ansprüche 1 bis 5, dadurch gekennzeichnet, daß eine Höchsttemperatur für den Grenzwert der Betriebstemperatur vorgegeben wird.

7. Verfahren nach einem der Ansprüche 1 bis 6, dadurch gekennzeichnet, daß der zulässige Grenzwert der Betriebstemperatur so geändert wird, daß ein zeitlich linearer Verlauf der Temperatur/Zeit-Belastung der Kochfläche erzielt wird.

8. Verfahren nach einem der Ansprüche 1 bis 6, dadurch gekennzeichnet, daß der zulässige Grenzwert der Betriebstemperatur so geändert wird, daß ein Verlauf der Temperatur/Zeit-Belastung der Kochfläche erzielt wird, der zeitlich nicht-linear ist, derart, daß anfänglich, bevorzugt in der ersten Hälfte der Lebensdauer, eine überproportionale Ausnutzung der Temperatur/Zeit-Belastbarkeit stattfindet.

9. Verfahren nach einem der Ansprüche 1 bis 8, dadurch gekennzeichnet, daß der Grenzwert der Betriebstemperatur in festen Temperaturschritten verändert wird.

10. Verfahren nach einem der Ansprüche 1 bis 8, dadurch gekennzeichnet, daß der Grenzwert der Betriebstemperatur entsprechend der Abweichung der gemessenen Belastung von der zulässigen Belastung kontinuierlich geändert wird.

11. Verfahren nach einem der Ansprüche 1 bis 8, dadurch gekennzeichnet, daß die aktuelle kumulierte Belastung bei der kumulierten Einschaltdauer seit Inbetriebnahme des Kochfeldes und die zulässige Belastung für diese Einschaltdauer der Bedienungsperson am Kochfeld angezeigt werden und die Änderung des Grenzwertes der Betriebstemperatur abhängig von einem visuellen Vergleich beider Anzeigen manuell erfolgt.

12. Verfahren nach einem der Ansprüche 1 bis 10, dadurch gekennzeichnet, daß die Veränderung des Grenzwertes der Betriebstemperatur selbsttätig in Abhängigkeit von dem Vergleich der aktuellen kumulierten Belastung und der zulässigen Belastung bei der jeweiligen kumulierten Einschaltdauer seit Inbetriebnahme des Kochfeldes erfolgt.

13. Vorrichtung zur Durchführung des Verfahrens nach Anspruch 1 oder einem der folgenden, mit
- einem Betriebstemperaturbegrenzer (9) mit einstellbarem Grenzwert der Bertriebstemperatur und mindestens einem ihm zugeordneten, die Betriebstemperatur in der beheizten Kochzone (2) erfassenden Temperatursensor (7),
- einer Steueranordnung (4) zum Abschalten der Beheizung der Kochzone (2) bei Erreichen des Grenzwertes der Betriebstemperatur,
dadurch gekennzeichnet, daß dem Betriebstemperaturbegrenzer (9) zum Einstellen seines Grenzwertes ein Zeitgeber und eine Meß- sowie Auswerteeinheit zum Messen, Speichern und Vergleichen der in den Verfahrensschritten angegebenen Werte zugeordnet ist.

14. Vorrichtung nach Anspruch 13 zur Durchführung des Verfahrens nach Anspruch 2, dadurch gekennzeichnet, daß die Auswerteeinheit einen Speicher zum Speichern der aktuellen kumulierten Einschaltdauer seit Inbetriebnahme des Kochfeldes und eine Rechenstufe zum Umrechnen der jeweilig gemessenen Temperatur/Zeit-Wertepaare der aktuellen betrieblichen Belastung auf äquivalente Temperatur/Zeit-Wertepaare bei einer Bezugstemperatur aufweist.

15. Vorrichtung nach Anspruch 13 oder 14, dadurch gekennzeichnet, daß die Auswerteeinheit einen Zähler zur Erfassung der Anzahl der Kochvorgänge sowie zur Bestimmung des Vergleichsintervalles aufweist.

16. Vorrichtung nach einem der Ansprüche 13 bis 15, dadurch gekennzeichnet, daß die Auswerteeinheit durch einen Mikroprozessor gebildet ist.
